Europäisches Patentamt

European Patent Office

Office européen des brevets

(11) Numéro de publication : **0 408 426 B1**

# (12) FASCICULE DE BREVET EUROPEEN

(45) Date de publication du fascicule du brevet :
**06.05.92 Bulletin 92/19**

(51) Int. Cl.$^5$ : **E04C 2/54, E04F 13/14**

(21) Numéro de dépôt : **90401941.1**

(22) Date de dépôt : **05.07.90**

(54) **Panneau de facade constitué d'une plaque de verre et d'une plaque métallique.**

(30) Priorité : **10.07.89 DE 3922583**

(43) Date de publication de la demande :
**16.01.91 Bulletin 91/03**

(45) Mention de la délivrance du brevet :
**06.05.92 Bulletin 92/19**

(84) Etats contractants désignés :
**AT BE CH DE DK ES FR GB GR IT LI LU NL SE**

(56) Documents cités :
**DE-A- 2 141 509**
**US-A- 4 251 598**

(73) Titulaire : **SAINT-GOBAIN VITRAGE**
**INTERNATIONAL**
**"Les Miroirs" 18, avenue d'Alsace**
**F-92400 Courbevoie (FR)**
(84) **BE CH DK ES FR GB GR IT LI LU NL SE AT**

Titulaire : **VEGLA Vereinigte Glaswerke GmbH**
**Viktoriaallee 3-5**
**W-5100 Aachen (DE)**
(84) **DE**

(72) Inventeur : **Ortmanns, Günter, Dr.**
**Höfchensweg 121**
**W-5100 Aachen (DE)**

(74) Mandataire : **Muller, René et al**
**SAINT-GOBAIN RECHERCHE 39, quai Lucien**
**Lefranc**
**F-93304 Aubervilliers (FR)**

**Description**

L'invention concerne un panneau de façade destiné à équiper les parois extérieures d'un bâtiment à côté de vitrages isolants pourvus d'une couche semi-réfléchissante. Le panneau est constitué d'une part d'un vitrage revêtu d'une couche correspondant à celle de la feuille extérieure du vitrage isolant et d'autre part d'une plaque métallique séparée du verre extérieur par une lame d'air. Les deux plaques de verre et de métal sont associées par une liaison périphérique étanche.

Un panneau de façade de ce type est connu par exemple d'après la demande de brevet allemande DE 21 41 509. Dans un tel panneau, la plaque métallique a sa surface dirigée vers la lame d'air soit brute soit galvanisée ou bien encore revêtue d'un matériau opaque et/ou coloré, ou pigmenté. La plaque de verre et la plaque métallique sont associées à leur périphérie par l'intermédiaire d'un cadre métallique, la lame d'air a la même épaisseur que celle de la lame des vitrages isolants habituels.

L'invention se donne pour tâche d'améliorer l'effet esthétique d'une façade qui comprend d'une part des vitrages isolants réfléchissants et d'autre part des panneaux de façade dont les propriétés de réflexion correspondent à celles des vitrages. Il s'agit d'harmoniser encore davantage l'aspect, la couleur et le coefficient de réflexion du panneau avec ceux du vitrage. On désire également simplifier le montage du panneau de façade.

L'invention se caractérise en ce que le panneau de façade comporte une plaque métallique qui est montée à une distance très faible de l'ordre du et ou moins de la plaque de verre et en ce qu'elle comporte du côté du verre des surépaisseurs qui s'appuient sur lui et qu'elle est couverte sur cette surface d'un dépôt absorbant la lumière.

Tandis que les panneaux de façade de l'art antérieur possèdent une surface dirigée vers la lame d'air qui a des propriétés de réflexion ou qui est même éventuellement colorée, une des caractéristiques de l'invention est d'avoir fait le choix d'un revêtement pour la surface de la plaque métallique qui absorbe le plus possible la lumière incidente. Les dépôts qui sont les mieux indiqués pour cette fonction sont noirs et mats tels que par exemple des couches de peinture mate colorée en noir ou des couches de suie. Les plaques métalliques colorées en noir avec d'autres procédés remplissent également la même fonction du moment qu'elles remplissent la condition d'avoir une réflexion quasiment nulle et de ne posséder aucune couleur propre. Grâce à ce moyen on est sûr que non seulement l'interface couche/lame d'air remplit les mêmes conditions que celle du vitrage isolant mais qu'en plus l'aspect et l'effet coloré du panneau de façade ne reçoit aucune influence de la plaque métallique arrière.

Les autres caractéristiques de l'invention contribuent également à élargir le domaine d'emploi du panneau de façade c'est le cas en particulier de la lame d'air particulièrement mince que l'on peut réaliser grâce aux bossages de la plaque métallique qui relèvent également de l'invention. Il est en effet possible de cette manière de réduire fortement l'épaisseur du panneau sans que les propriétés optiques souhaitées en soient affectées. Plus le panneau est mince, plus son domaine d'utilisation est large. On peut en effet l'associer à d'autres éléments du bâtiment tels que des panneaux isolants qui, avec un autre panneau que celui de l'invention, devraient être beaucoup plus minces.

Comme la plaque métallique arrière n'est pas en contact avec le verre sur de grandes surfaces grâce à ses bossages, il n'est pas nécessaire de la prévoir très rigide. Au contraire, elle peut être relativement mince, comme c'est le cas si elle est constituée d'un métal qui n'a que quelques dizièmes de millimètres d'épaisseur. Il s'ensuit qu'elle est relativement mince et qu'elle ne contribue que très peu au poids global du panneau de façade. La plaque métallique est constituée en particulier de tôles d'aluminium, de cuivre, d'acier inoxydable ou zingué.

Les bossages de la plaque métallique peuvent être disposés d'une manière quelconque simplement leur contact avec la plaque de verre doit se faire selon des points ou des lignes. Ces zones de contact ponctuelles ou linéaires sont à peine visibles et ne modifient pratiquement pas l'aspect du panneau de façade en particulier lorsqu'ils sont répartis régulièrement. Des surépaisseurs ponctuelles d'environ 0,5 mm de hauteur se sont révélées particulièrement adaptées. De tels bossages peuvent être obtenus par la pression d'outils pointus sur la surface arrière de la plaque métallique.

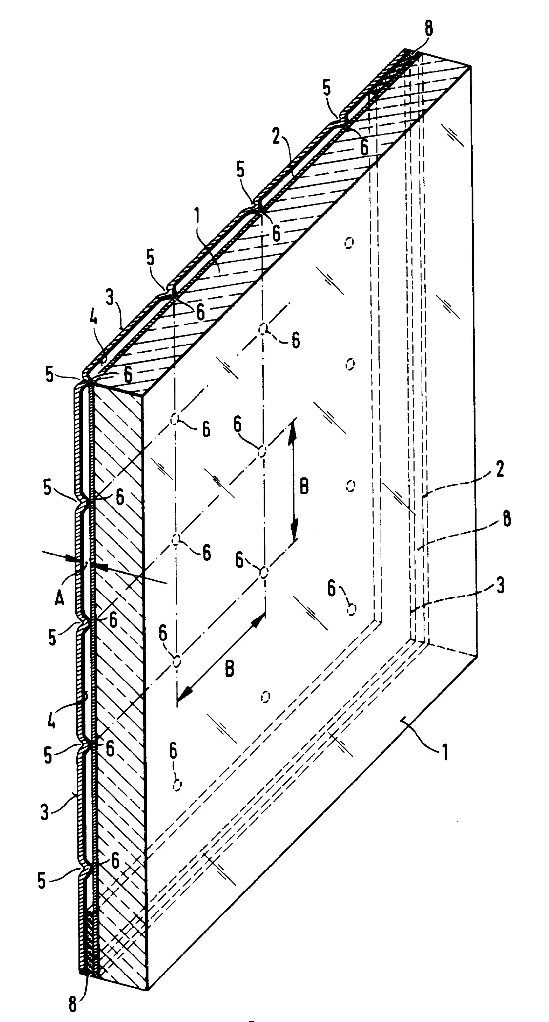

Un mode de réalisation préféré de l'invention sera décrit dans la suite à l'aide du dessin de la figure qui représente une vue partielle d'un panneau de façade.

Le vitrage 1 est constitué par exemple d'un verre flotté de 8 mm d'épaisseur. Il constitue la face extérieure du panneau. Il peut s'agir d'un vitrage recuit exempt de contraintes comme par exemple en verre flotté ou bien d'un vitrage trempé thermiquement. La plaque de verre 1 est équipée sur sa surface arrière d'une couche semi-réfléchissante 2. Cette couche 2 est ou bien simple ou bien multiple. Comme couche simple on trouve par exemple des couches d'oxydes métalliques déposées par pyrolyse et comme couches multiples des couches déposées sous vide par exemple grâce au procédé de pulvérisation cathodique à magnétron. Ces derniers dépôts sont souvent constitués d'une couche de métal en particulier d'argent placée entre une couche d'adhérence et une couche protectrice, toutes deux faites de composés métalliques.

La plaque arrière du panneau de façade est constituée par une plaque d'aluminium 3 épaisse de 0,2 à 1 mm. Sur sa surface dirigée vers le vitrage 1 la plaque d'aluminium 3 est noircie, en l'occurrence elle est recouverte d'une couche de peinture noire mate. La plaque d'aluminium 3 est équipée de petits bossages 5 régulièrement espacés. Ces bossages 5 constituent du côté du vitrage 1 des surépaisseurs ponctuelles 6. Celles-ci sont en contact avec la surface du verre et assurent une distance constante (A) entre la surface métallique et la surface vitreuse. Cette distance est l'épaisseur de la lame d'air. Les surépaisseurs 6 ont entre elles, dans les deux directions, des distances (B) comprises entre 20 et 150 mm, de préférence entre 30 et 120 mm, leur hauteur va de 0,2 à 1 mm et de préférence de 0,5 à 0,8 mm.

A la périphérie le vitrage 1 et la plaque métallique 3 sont associés par une couche de colle 8. Cette couche de colle 8 est réalisée avec des colles élastomères avec une diffusion de vapeur d'eau faible. Ce sont par exemple des polysulfures, des silicones ou des polyuréthanes. Il s'agit là des colles utilisées habituellement dans la fabrication des vitrages isolants.

La fabrication du panneau de façade se passe de la façon suivante : le vitrage 1 avec sa couche semi-réfléchissante 2 dirigée vers le haut est posé sur un support horizontal plan. On dépose à sa périphérie un cordon de colle. Dans ce cas, c'est le cordon de colle lui même qui sert d'intercalaire mais il est également possible d'utiliser la technique habituelle de la fabrication des vitrages isolants c'est-à-dire de mettre en place un cadre métallique de l'épaisseur voulue dont les deux faces sont enduites de colle et qui est placé sur le vitrage. Dans une deuxième phase, c'est la plaque métallique 3 revêtue de sa couche absorbant la lumière 4 qui est déposée sur le vitrage 1, la couche étant orientée vers le bas. Une presse permet d'obtenir la pression et la distance voulues à la périphérie de l'ensemble. Eventuellement, le canal qui subsiste à l'extérieur du cadre intercalaire entre le vitrage et la plaque métallique est rempli d'un matériau adapté par exemple un polysulfure.

## Revendications

1. Panneau de façade destiné à revêtir les parois extérieures d'un bâtiment à côté de vitrages isolants revêtus d'une couche semi-réfléchissante comportant un vitrage revêtu d'une couche correspondant à celle de la feuille extérieure du vitrage isolant et une plaque métallique disposée derrière le vitrage à une certaine distance ainsi qu'une liaison périphérique entre le vitrage et la plaque métallique, **caracterisé en ce que** la plaque métallique (3) est placée à une distance très faible d'environ 1 mm ou moins derrière le vitrage (1), et que sa surface du côté du vitrage (1) comporte des surépaisseurs (6) qui s'appuient sur le vitrage 1 et qu'elle est équipée sur cette face d'un dépôt (4) absorbant la lumière.

2. Panneau selon la revendication 1, **caractérisé en ce que** les surépaisseurs (6) du côté de la plaque métallique (3) qui fait face au vitrage (1) sont constituées par des bossages ponctuels (5) de la plaque métallique (3).

3. Panneau selon la revendication 1 ou la revendication 2, **caractérisé en ce que** les surépaisseurs (6) ont une hauteur comprise entre 0,5 et 0,8 mm.

4. Panneau selon l'une ou plusieurs des revendications 1 à 3, **caractérisé en ce que** la distance (B) séparant les surépaisseurs (6) est comprise entre 20 et 150 mm.

5. Panneau selon la revendication 4, **caractérisé en ce que** la distance (B) des surépaisseurs (6) est comprise entre 30 et 120 mm.

6. Panneau selon l'une ou plusieurs des revendications 1 à 5, **caractérisé en ce que** les surépaisseurs (6) sur la plaque métallique (3) sont placées dans un ordre géométrique régulier.

7. Panneau selon l'une ou plusieurs des revendication 1 à 6, **caractérisé en ce que** le vitrage (1) est constitué de verre trempé thermiquement.

8. Panneau selon l'une ou plusieurs des revendications 1 à 7, **caractérise en ce que** la plaque métallique (3) est faite d'aluminium, de cuivre, d'acier inoxydable ou zingué.

9. Panneau selon la revendication 8, **caractérisé en ce que** la plaque métallique (3) a une épaisseur comprise entre 0,2 et 1 mm.

10. Panneau selon l'une des revendications 1 à 9, **caractérisé en ce que** la couche (4) absorbant la lumière est constituée d'un dépôt noir mat.

## Patentansprüche

1. Fassadenelement zum Verkleiden der äußeren Wandflächen eines Gebäudes neben mit einer teilreflektierenden Schicht versehenen Isolierglasscheiben, mit einer der beschichteten Außenscheibe der Isolierglasscheibe entsprechenden beschichteten Glasscheibe und einer hinter der Glasscheibe in einem bestimmten Abstand angeordneten Metallplatte, sowie mit einer dichten Randverbindung zwischen der Glasscheibe und der Metallplatte, **dadurch gekennzeichnet**, daß die Metallplatte (3) mit einem sehr geringen Luftabstand von etwa 1 mm oder weniger hinter der Glasscheibe (1) angeordnet ist, daß ihre deren der Glasscheibe (1) zugewandte Oberfläche sich auf der Glasscheibe (1) abstützende Erhebungen (6) aufweist und daß sie auf dieser Seite mit einem lichtabsorbierenden Belag (4) versehen ist.

2. Fassadenelement nach Anspruch 1, dadurch gekennzeichnet, daß die Erhebungen (6) auf der Glasscheibe (1) zugewandten Seite der Metallplatte (3) durch punktförmige Ausbuchtungen (5) der Metallplatte (3) gebildet sind.

3. Fassadenelement nach Anspruch 1 oder 2, dadurch gekennzeichnet, daß die Erhebungen (6) eine Höhe von 0,5 bis 0,8 mm aufweisen.

4. Fassadenelement nach einem oder mehreren der Ansprüche 1 bis 3, dadurch gekennzeichnet, daß der gegenseitige Abstand (B) der Erhebungen (6) zwischen 20 und 150 mm beträgt.

5. Fassadenelement nach Anspruch 4, dadurch gekennzeichnet, daß der Abstand (a) der Erhebungen (6) zwischen 30 und 120 mm beträgt.

6. Fassadenelement nach einem oder mehreren der Ansprüche 1 bis 5, dadurch gekennzeichnet, daß die Erhebungen (6) auf der Metallplatte (3) in geometrisch regelmäßiger Anordnung angeoranet sind.

7. Fassadenelement nach einem oder mehreren der Ansprüche 1 bis 6, dadurch gekennzeichnet, daß die Glasscheibe (1) aus thermisch vorgespanntem Glas besteht.

8. Fassadenelement nach einem oder mehreren der Ansprüche 1 bis -7, dadurch gekennzeichnet, daß die Metallplatte (3) aus Aluminium-, Kupfer-, Edelstahl- oder verzinktem Stahlblech besteht.

9. Fassadenelement nach Anspruch 8, dadurch gekennzeichnet, daß die Metallplatte eine Dicke von 0,2 bis 1 mm aufweist.

10. Fassadenelement nach einem der Ansprüche 1 bis 9, dadurch gekennzeichnet, daß der lichtabsorbierende Belag (4) aus einer mattschwarzen Beschichtung besteht.

## Claims

1. Facade panel for covering the outside walls of a building beside insulating glazings coated with a semi-reflecting coating having a glazing coated with a coating corresponding to that of the outer sheet of the insulating glazing and a metal plate placed behind the glazing at a certain distance, as well as a peripheral connection between the glazing and the metal plate, characterized in that the metal plate (3) is placed at a very limited distance of approximately 1 mm or less behind the glazing (1) and that its surface on the side of the glazing (1) has reinforcements (6) which bear on the glazing (1) and it is equipped on said face with a light-absorbing deposit (4).

2. Panel according to claim 1, characterized in that the reinforcements (6) of the side of the metal plate (3) facing the glazing (1) are constituted by punctiform bosses (5) of the metal plate (3).

3. Panel according to claims 1 or 2, characterized in that the reinforcements (6) have a height between 0.5 and 0.8 mm.

4. Panel according to one or more of the claims 1 to 3, characterized in that the distance (B) separating the reinforcements (6) is between 20 and 150 mm.

5. Panel according to claim 4, characterized in that the spacing (B) of the reinforcements (6) is between 30 and 120 mm.

6. Panel according to one or more of the claims 1 to 5, characterized in that the reinforcements (6) on the metal plate (3) are placed in a regular geometrical order.

7. Panel according to one or more of the claims 1 to 6, characterized in that the glazing (1) is made from thermally tempered glass.

8. Panel according to one or more of the claims 1 to 7, characterized in that the metal plate (3) is made from aluminium, copper or stainless or galvanized steel.

9. Panel according to claim 8, characterized in that the metal plate (3) has a thickness between 0.2 and 1 mm.

10. Panel according to one of the claims 1 to 9, characterized in that the light-absorbing coating (4) is constituted by a matt black deposit.